# EUROPEAN PATENT SPECIFICATION

(11) **EP 3 236 102 B1**
(45) Date of publication and mention of the grant of the patent: **12.12.2018**
(21) Application number: 17382105.9
(22) Date of filing: 01.03.2017
(51) Int. Cl.: F16F 9/02

(54) **GAS CYLINDER**
GASZYLINDER
BOUTEILLE DE GAZ

(30) Priority: 18.04.2016 ES 201630489
(43) Date of publication of application: 25.10.2017
(73) Proprietor: NITROGAS GROUP, S.L., 01510 Minano (ES)
(72) Inventor: DEL TESO DÍEZ, Luis, 01169 Aramaio (ARABA) (ES); CANALES RODRIGUEZ, Beatriz, 01510 MIÑANO (ES)
(74) Representative: Igartua, Ismael

(56) References cited:
- EP-A1- 2 662 589
- EP-A1- 2 778 465

## Description

### TECHNICAL FIELD

The present invention relates to pressurized gas cylinders, and more specifically to those pressurized gas cylinders comprising safeties to prevent explosions and accidents gas cylinders can cause should the working conditions for which they are designed be exceeded.

### PRIOR ART

Gas cylinders are widely used in industry and comprise a jacket or main body that is hollow and closed at one end, and a piston moving linearly with respect to the main body actuated by an actuation element (by a stamping die for example). The main body, together with the piston, defines a gas chamber holding a pressurized gas.

The gas cylinder is set for the piston to accompany a press stamping die in a programmed stroke and to achieve maximum movement (a rated stroke). If a movement that is greater than the movement for which the piston is designed is caused in said piston (phenomenon known as overstroke), or if the piston encounters an obstacle (screw, tool, etc.) during the stroke of the piston, there is a risk of causing the gas cylinder to explode resulting from the main body breaking due to the impact of the press stamping die.

There are different solutions to avoid this problem, or to at least minimize the risk, and most of them consist of causing gas to leak out of the gas chamber when the piston exceeds its rated stroke.

Patent documents WO2010102994A1 and EP2177783A2, for example, describe a gas cylinder with a solution of this type. The gas cylinders disclosed in these patent documents comprise an annular body (or sleeve) arranged between the main body and the piston, which moves only when actuated directly by the actuation element. The annular body comprises a safety elevation projecting from the main body, such that the actuation element contacts said safety elevation before contacting the main body. An O-ring is arranged between the main body and the annular body for providing leak-tightness between both and preventing gas from leaking out between both. The main body comprises a recess on an inner surface, and when the actuation element contacts the safety elevation, causing the movement of the annular body pushed by the actuation element, the O-ring also moves and reaches the height of said recess. When it reaches that height, leak-tightness between the main body and the annular body is lost, and the gas present in the gas chamber is discharged from said gas chamber between both bodies.

### DISCLOSURE OF THE INVENTION

The object of the invention is to provide a gas cylinder as defined in the claims.

The gas cylinder comprises a cylindrical main body comprising an upper opening and an annular groove on an outer surface extending along the entire circular contour of said outer surface and serving to assemble the gas cylinder in its operative position, and a piston that can move linearly and longitudinally inside the main body, defining, together with said cylindrical body, a gas chamber with pressurized gas therein inside the main body, and projecting from the main body through the upper opening.

The gas cylinder further comprises a sleeve arranged between the piston and the main body, a ring arranged between the sleeve and the main body for coupling said sleeve to said main body, and a safety elevation formed by way of a vertical extension of the sleeve and projecting from an upper surface of the main body. Therefore, if the piston is forced, by means of actuating a press (particularly a press stamping die), to move more than a predetermined maximum movement (rated stroke), a phenomenon known as overstroke, the stamping die contacts said safety elevation before contacting the main body, and this can be used to prevent said main body from exploding (or to reduce the risk of an explosion).

The distance between the ring and a lower surface of the main body, opposite the upper surface of said main body, is less than the distance between the annular groove of the main body and said lower surface of said main body. Therefore, for one and the same length of the gas cylinder, which is usually established by regulations and standards relating to gas cylinders (for example VDI 3003 and ISO1191) and the client, the height the length of the main body of the cylinder can be reduced, since the part of the main body required above the annular groove can be greatly reduced. This allows increasing the distance between an upper surface of the safety elevation and the upper surface of the main body, greater overstroke being required for the stamping die pushing the piston to contact the main body. As a result, the risk of causing the main body to explode due to direct contact between the stamping die and said main body is reduced.

These and other advantages and features of the invention will become evident in view of the drawings and detailed description of the invention.

### DESCRIPTION OF THE DRAWINGS

Figure 1 shows a preferred embodiment of the gas cylinder of the invention with the piston in its extended position.
Figure 2 shows the gas cylinder of Figure 1, with the piston having moved the rated stroke.
Figure 3 shows the gas cylinder of Figure 1, in an overstroke position in which the deformable area of the sleeve is broken.
Figure 4 shows the gas cylinder of Figure 1, when the upward movement speed of the piston is high.
Figure 5 shows detail A of Figure 1.
Figure 6a shows another embodiment of the gas cylinder of the invention, with the piston in its extended position.
Figure 6b shows the gas cylinder of Figure 6a, in an overstroke position in which an annular groove of the main body and an annular groove of the sleeve are opposite one another.
Figure 7a shows another embodiment of the gas cylinder of the invention, with the piston in its extended position.
Figure 7b shows the gas cylinder of Figure 7a, in an overstroke position in which the deformable area of the sleeve is broken.

### DETAILED DISCLOSURE OF THE INVENTION

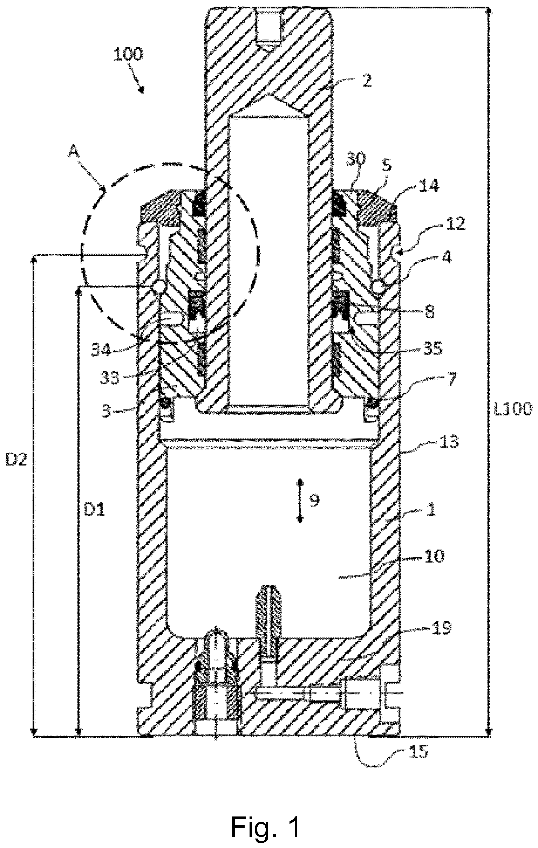

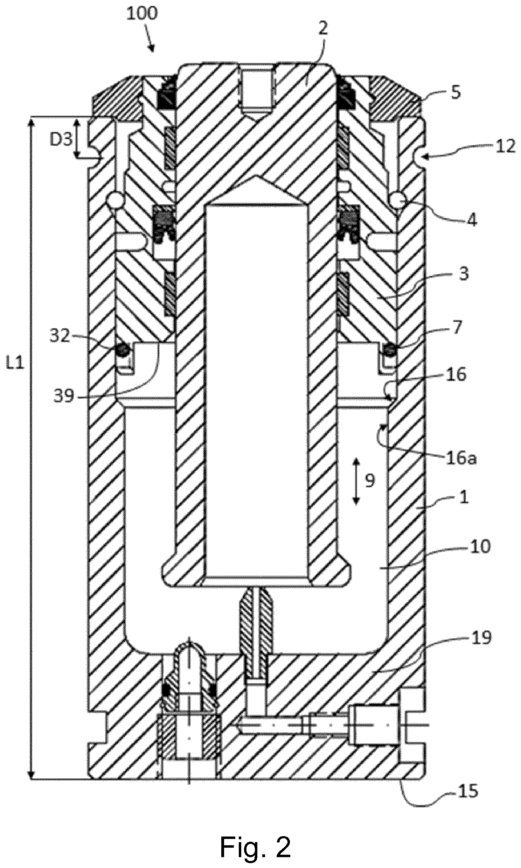

Figures 1 to 4 show a preferred embodiment of the gas cylinder 100 of the invention. The gas cylinder 100 comprises an annular main body 1 and a piston 2 which is partially housed inside the main body 1, in a manner concentric to said main body 1, and which can move linearly and longitudinally with respect to the main body 1 in an axial direction 9 (both ways). The main body 1 comprises a base 19 and an upper opening at the end opposite the base 19, the upper opening allowing the movement of the piston 2, and said piston 2 projecting from the main body 1 through said upper opening. The main body 1 further defines therein, together with the piston 2, a gas chamber 10 in which pressurized gas is arranged, said gas chamber being demarcated by the inside of the main body 1 and by the piston 2.

The main body 1 further comprises an annular groove 12 on an outer surface 13, extending along the entire circular contour of said outer surface 13 and adapted for being used in assembly of the gas cylinder 100 in its operative position, said annular groove 12 furthermore being used to keep it in position. An assembly jig not depicted in the drawings is coupled to annular grooves 12 of this type to keep the gas cylinder 100 in said position.

The gas cylinder 100 further comprises a sleeve 3 arranged between the piston 2 and the main body 1, a ring 4, preferably a metal ring, arranged between the sleeve 3 and the main body 1 for coupling said sleeve 3 to a said main body 1 and keeping them coupled to one another, and a safety elevation 30 formed by way of a vertical extension of the sleeve 3. The safety elevation 30 axially projects from an upper surface 14 of the main body 1, such that the sleeve 3 (specifically the safety elevation 30), is contacted before the main body 1 by an actuation element which causes the movement of the piston 2 (preferably a press stamping die), when the piston 2 exceeds a pre-established rated stroke (by design). The phenomenon of exceeding said rated stroke is known as overstroke of the gas cylinder 100 (or overstroke of the piston 2).

Being able to contact the safety elevation 30 allows providing safety in the event of overstroke to prevent, or to try to prevent, the gas cylinder 100 from exploding due to the pressurized gas arranged in the gas chamber 10 defined by the main body 1. Contact with the safety elevation 30 can cause, for example, said safety elevation 30 to move, causing to a certain extent the generation of a pathway for the pressurized gas to escape from the gas chamber 10, which reduces the risk the gas cylinder 100 exploding as a result of the main body 1 (vessel) breaking due to excessive movement of the piston 2.

Gas cylinders have a safety distance established by regulations and standards or by the user. When the piston of the gas cylinder moves its rated stroke, there is a safety distance between the body and the shaft that is usually 3 mm. In the prior art, the safety elevation invades those 3 mm (or the corresponding safety distance), such that in addition to maintaining the corresponding safety distance between the main body 1 of the gas cylinder 100 and the rated stroke of the piston 2, when the rated stroke is exceeded the sleeve is caused to move as a result of the stamping die pushing it upon hitting against the safety elevation, at least part of the gas present in the corresponding gas chamber being released.

In the gas cylinder 100 of the invention the safety elevation 30 does not invade the safety distance, which is maintained between the rated stroke of the piston 2 and the safety elevation 30 itself. Unlike what occurs in the prior art, this causes the safety elevation 30 to not be acted on as soon as the rated stroke is exceeded, which increases the distance the press stamping die must move that is beyond the rated stroke of the piston 2 for acting on the main body 1 of the gas cylinder 100, safety in the event of said main body 1 deteriorating and/or exploding being increased compared with prior art solutions. To that end, the ring 4 is arranged in the gas cylinder 100 such that the distance D1 between said ring 4 and a lower surface 15 of the main body 1, opposite the upper surface 14 of said main body 1, is less than the distance D2 between the annular groove 12 of the main body 1 and said lower surface 15 of said main body 1. Therefore, as a result of the arrangement between the ring 4 and the annular groove 12 the length L1 of the main body 1 can be reduced, by reducing the distance D3 between the upper surface 14 of the main body 1 and the annular groove 12, without changing the maximum length L100 of the gas cylinder 100 (length of the gas cylinder 100 with the piston extended, as shown in Figure 1), which allows maintaining (or even increasing) the safety distance between an upper surface 30a of the safety elevation 30 and the rated stroke of the piston 2, and increasing the distance between an upper surface 30a of the safety elevation 30 and the upper surface 14 of the main body 1. The greater this distance, the greater the safety of the gas cylinder 100, since the stroke of the press stamping die required for contacting the main body 1 (vessel of the gas) is increased.

This increase in distance between the upper surface 30a of the safety elevation 30 and the upper surface 14 of the main body 1 is not possible with the designs of conventional gas cylinders 100, since this could only be generated by acting on the corresponding safety elevation (elongating it), and this would involve reducing the rated stroke of the piston 2 if the maximum length L100 of the gas cylinder 100 is to be maintained, or increasing said maximum length L100 if the maximum stroke of the piston 2 is to be maintained, these being aspects which are limited by regulations and standards (or by regulations and standards and the user) and usually cannot be changed.

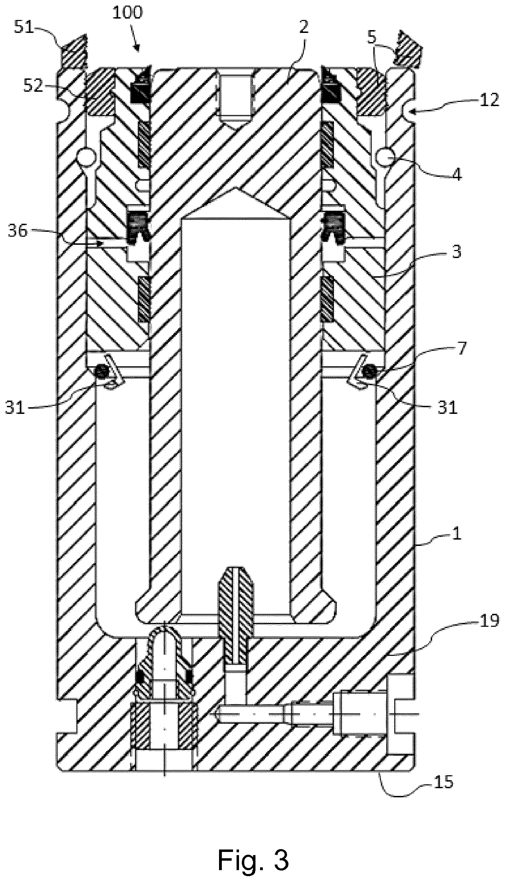

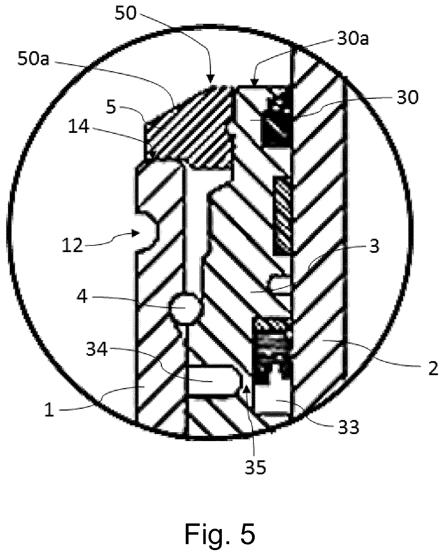

In the preferred embodiment of the invention, the gas cylinder 100 further comprises an annular safety element 5 arranged on the upper surface 14 of the main body 1, surrounding the safety elevation 30 of the sleeve 3. In the preferred embodiment, the upper surface 30a of the upper elevation 30 and an upper surface 50 of the safety element 5 are at the same level, as shown in Figure 5, for example, i.e., the distances between the base 19 of the main body 1 and the point of said surfaces 30a and 50 farthest away from said base 19 are the same. Therefore, if the piston 2 exceeds its rated stroke and the sleeve 3 is further caused to move due to the pushing provided by the corresponding actuation element, said actuation element also hits against the safety element 5 before contacting the main body 1. The safety element 5 moves integrally with the sleeve 3, but it is formed by a (non-shape memory) deformable material or by a material that can break due to impacts, such as a plastic material, for example, such that when the actuation element hits against the safety element 5, said safety element 5 deforms or breaks. A case may arise where the piston 2 exceeds its rated stroke but the actuation element does not contact the main body 1; however, a user may not be aware of this situation and would not act accordingly (to correct it or even to replace the gas cylinder). However, as a result of the safety element 5, in said case, in the gas cylinder 100 of the invention the safety element 5 would be damaged (deformed or broken) and a user could detect this upon examination with the naked eye, thereby detecting that the piston 2 has exceeded its rated stroke and being able to act accordingly, regardless of whether or not the actuation element hits against the main body 1 of the gas cylinder 100. Figure 3 shows the safety element 5 split into two parts 51 and 52 (broken) due to the actuation element acting on it.

In the preferred embodiment, the upper surface 50 of the safety element 5 is furthermore adapted for preventing an element from being deposited on same. The case where an element (a screw or nut, for example) is left accidentally arranged on the main body 1, which may affect the stroke of the piston 2, particularly if the height of said element falls within the operative stroke of the piston 2, is not unusual. This possibility is prevented with said upper surface 50 since said element would not be able to be located on the safety element 5. In said preferred embodiment, the upper surface 50 of the safety element 5 comprises an area 50a that is inclined towards the outside of the gas cylinder 100, the distance between said upper surface 50 and the upper surface 14 of the main body 1 being less the further said upper surface 50 is away from of the piston 2, although in other embodiments said upper surface 50 could have a different configuration (such as the entire upper surface 50 being inclined, for example, or other configurations).

In the preferred embodiment, the gas cylinder 100 further comprises sealing means 7 (an O-ring, for example) arranged between the main body 1 and the sleeve 3 for providing a leak-tight closure between said main body 1 and said sleeve 3 and preventing gas from leaking out of the gas chamber 10 between said main body 1 and said sleeve 3. The main body 1 comprises a variation 16 on its inner surface 16a defining the gas chamber 10, and the sleeve 3 comprises a deformable area 31 that deforms upon contact with the variation 16 and projects from a lower surface 39 of said sleeve 3. The sleeve 3 comprises a housing 32 for the sealing means 7, above the deformable area 31, and when the deformable area 31 contacts the variation 16, said deformable area 31 deforms or breaks, said housing 32 thereby being modified. When said housing 32 is modified, the leak-tightness offered by the sealing means 7 is lost, and at least part of the gas present in the gas chamber 10 escapes between the main body 1 and the sleeve 3.

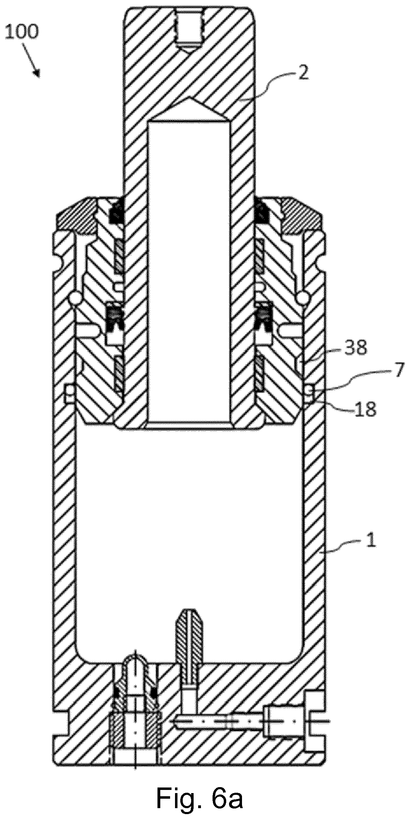

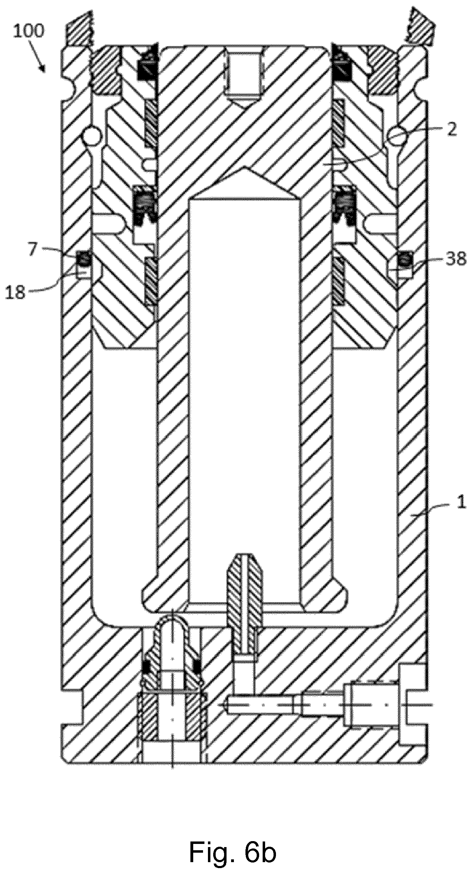

In another embodiment of the gas cylinder 100 of the invention, shown by way of example in Figures 6a and 6b, the sleeve 3 does not comprise a deformable area. Instead it comprises an annular groove 38 opposite the main body 1, and said main body 1 in turn comprises an annular groove 18 opposite the sleeve 3 which houses the sealing means 7. The main body 1 and the sleeve 3 are configured such that the annular grooves 18 and 38 are opposite when another only when the piston 2 exceeds its rated stroke, and when the sealing means 7 are opposite one another they are not capable of preventing the gas from leaking out (see Figure 6b), the risk of the main body 1 exploding due to an excessive increase in pressure in the gas chamber 10 being reduced.

The deformable area 31 is at the end of the sleeve 3 that is opposite the elevation element 30, and the variation 16 and said deformable area 31 are configured for coming into contact with one another when the sleeve 3 moves as a result of overstroke of the piston 2. So, where overstroke exists, in addition to the safety discussed above, at least part of the gas present in the gas chamber 10 is caused to escape, preventing or greatly reducing the risk of the gas in said gas chamber 10 reaching high pressures that could result in the gas cylinder 100 (the main body 1) exploding.

If the piston 2 is caused to move upwards at a speed that is greater than the speed for which it is designed, the risk of causing the piston 2 to break, said piston 2 thereby being ejected from the main body 2, is present. Solutions for this problem are known, such as the solution disclosed in patent document WO9941520A1, for example. This patent document discloses a solution for reducing to zero the speed of a piston which is moving at a high speed during a failure in use of the gas cylinder, and said solution comprises frangible means to prevent the piston from being ejected from the main body of said gas cylinder.

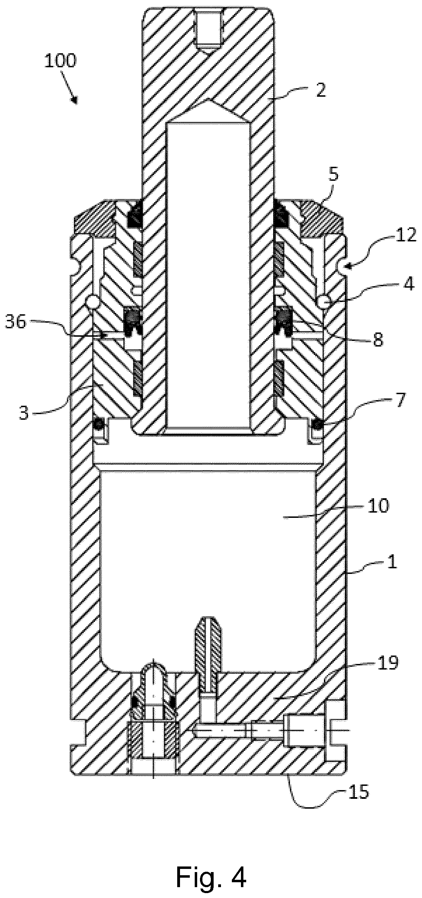

To prevent or lower this risk, the gas cylinder 100 of the invention can comprise, as in the case of the preferred embodiment, for example, a sleeve 3 defining an annular housing 33 and an annular groove 34. The annular housing 33 is demarcated between the sleeve 3 itself and the piston 2, and the gas cylinder 100 comprises sealing means 8 housed in said annular housing 33 to prevent gas from leaking out of the gas chamber 10 through a possible gap existing between the sleeve 3 and the piston 2. The annular groove 34 is demarcated between the sleeve 3 itself and the main body 1, and the sleeve 3 comprises an annular area 35 between said annular groove 34 and the annular housing 33. The annular housing 33, the annular groove 34 and the annular area 35 are configured such that when the sleeve 3 bears a force equal to or greater than a predetermined value, said annular area 35 at least partially breaks, opening up a pathway 36 connecting the piston 2 with the main body 1 through the sleeve 3, said pathway 36 going through the annular housing 33 and the annular groove 34, at least part of the gas present in the gas chamber 100 escaping through said pathway 36 out of the gas cylinder 100. The pathway 36 can also be generated where there is overstroke of the piston 2 causing the deformable area 31 to break (as shown by way of example in Figure 3), or it can be generated without the deformable area 31 breaking or deforming (as shown by way of example in Figure 4).

So in situations where the sleeve 33 bears enormous pressures, the risk of said gas cylinder 100 exploding is reduced or prevented due to said breaking of the annular area 34 and said discharge of gas. This excess pressure may arise, for example, should the piston 2 tend to move in a direction out of the main body 1 at an excessive speed, or even when the stroke moved by the piston 2 exceeds the stroke for which it is designed (overstroke). The predetermined value of the force depends on the gas cylinder 100 used at all times, specifically on its configuration and on the maximum force said gas cylinder 100 must bear.

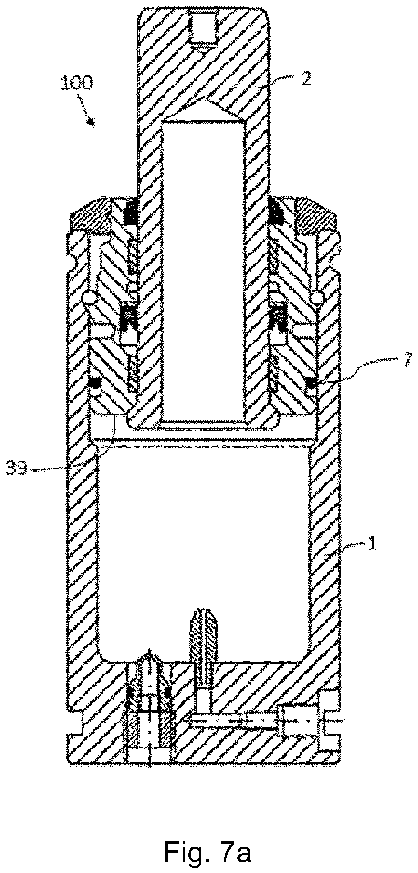

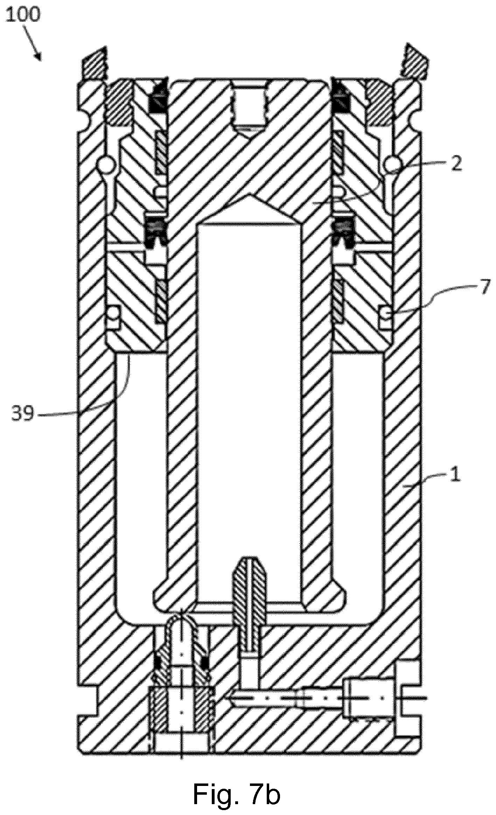

In another embodiment of the gas cylinder 100 of the invention shown by way of example in Figures 7a and 7b, the variation 16 cooperates in some circumstances in helping the annular area 35 to at least partially break, opening up the aforementioned pathway 36. When the intention is to exceed the rated stroke of the piston 2, said piston 2 hits against the variation, preventing said additional movement, and that generates an excessive pressure that helps the breaking of said annular area 35 (which is the weakest area).

## Claims

1. Gas cylinder comprising a cylindrical main body (1) comprising an upper opening and comprising an annular groove (12) extending along the entire circular contour of an outer surface (13) of said main body (1) and serving to assemble the gas cylinder (100) in its operative position, a piston (2) partially housed in the main body (1) defining, together with the main body (1), a gas chamber (10) inside said main body (1), being able to move linearly and longitudinally and projecting from the main body (1) through the upper opening, a sleeve (3) arranged between the piston (2) and the main body (1), a ring (4) arranged between the sleeve (3) and the main body (1) for coupling said sleeve (3) to said main body (1), and a safety elevation (30) formed by way of a vertical extension of the sleeve (3) and axially projecting from an upper surface (14) of the main body (1), **characterized in that** the distance (D1) between the ring (4) and a lower surface (15) of the main body (1), opposite the upper surface (14) of said main body (1), is less than the distance (D2) between the annular groove (12) of the main body (1) and said lower surface (15) of said main body (1).

2. Gas cylinder according to claim 1, comprising a safety element (5) arranged on the upper surface (14) of the main body (1) surrounding the sleeve (3), said safety element (5) being made of a non-shape memory deformable material or of a material that can break due to impacts.

3. Gas cylinder according to claim 2, wherein the safety element (5) comprises an upper surface (50) adapted for preventing an element from being deposited on same.

4. Gas cylinder according to claim 3, wherein the upper surface (50) of the safety element (5) is inclined, the distance between said upper surface (50) and the upper surface (14) of the main body (1) being less the further said upper surface (50) is away from the piston (2).

5. Gas cylinder according to any of claims 1 to 4, comprising sealing means (7) between the main body (1) and the sleeve (3) for providing a leak-tight closure between both bodies (1, 3) and preventing gas from leaking out of the gas chamber (10), the main body (1) comprising a variation (16) on its inner surface (16a) defining the gas chamber (10), and the sleeve (3) comprising a deformable area (31) that deforms upon contact with the variation (16), the leak-tightness between the main body (1) and the sleeve (3) provided by the sealing means (7) being broken, said variation (16) and said deformable area (31) being configured for coming into contact when the sleeve (3) moves as a result of overstroke of the piston (2).

6. Gas cylinder according to claim 5, wherein the deformable area (31) is configured for breaking upon hitting against the variation (16) in the main body (1), the sleeve (3) comprising a housing (32) which houses the sealing means (7) and is at least partially demarcated by the deformable area (31), said housing (32) being modified when said deformable area (31) breaks, and thereby causing the loss of leak-tightness offered by the sealing means (7).

7. Gas cylinder according to claim 5, wherein the deformable area (31) is configured to deform upon hitting against the variation (16) of the main body (1), the sleeve (3) comprising a housing (32) which houses the sealing means (7) and is at least partially demarcated by the deformable area (31), said housing (32) being modified when said deformable area (31) deforms, and thereby causing the loss of leak-tightness offered by the sealing means (7).

8. Gas cylinder according to any of claims 1 to 7, wherein the sleeve (3) defines an annular housing (33) demarcated between the sleeve (3) and the piston (2), the cylinder (100) comprising sealing means (8) arranged in said annular housing (33) to prevent gas from leaking out of the gas chamber (10) between the sleeve (3) and the piston (2).

9. Gas cylinder according to claim 8, wherein the sleeve (3) defines an annular groove (34) demarcated between the sleeve (3) and the main body (1), the sleeve (3) comprising an annular area (35) between said annular groove (34) and the annular housing (33), the annular housing (33), the annular groove (34) and the annular area (35) being configured such that when the sleeve (3) bears a force equal to or greater than a predetermined value, said annular area (35) at least partially breaks, opening up a pathway (36) connecting the piston (2) with the main body (1) through the sleeve (3).

10. Gas cylinder according to claim 9, wherein the pathway (36) goes through the annular housing (33) and the annular groove (34).

## Patentansprüche

1. Gaszylinder umfassend einen zylindrischen Hauptkörper (1), umfassend eine obere Öffnung und umfassend eine ringförmige Nut (12), welche sich entlang der gesamten kreisförmigen Kontur einer Außenfläche (13) des genannten Hauptkörpers (1) erstreckt und dazu dient, den Gaszylinder (100) in dessen Betriebsstellung zusammenzufügen, einen im Hauptkörper (1) teilweise aufgenommenen Kolben (2), welcher, zusammen mit dem Hauptkörper (1), eine Gaskammer (10) innerhalb des genannten Hauptkörpers (1) definiert, welcher in der Lage ist, sich linear und länglich zu bewegen und aus dem Hauptkörper (1) durch die obere Öffnung herauszuragen, eine Hülse (3), welche zwischen dem Kolben (2) und dem Hauptkörper (1) angeordnet ist, einen Ring (4), welcher zwischen der Hülse (3) und dem Hauptkörper (1) angeordnet ist, um die genannte Hülse (3) mit dem genannten Hauptkörper (1) zu koppeln, und eine Sicherheitserhöhung (30), welche in der Art einer vertikalen Erstreckung der Hülse (3) gebildet ist und axial aus einer oberen Fläche (14) des Hauptkörpers (1) herausragt, **dadurch gekennzeichnet, dass** der Abstand (D1) zwischen dem Ring (4) und einer unteren Fläche (15) des Hauptkörpers (1), der oberen Fläche (14) des genannten Hauptkörpers (1) entgegengesetzt, kleiner als der Abstand (D2) zwischen der ringförmigen Nut (12) des Hauptkörpers (1) und der genannten unteren Fläche (15) des genannten Hauptkörpers (1) ist.

2. Gaszylinder nach Anspruch 1, umfassend ein Sicherheitselement (5), welches auf der oberen Fläche (14) des Hauptkörpers (1) die Hülse (3) umgebend angeordnet ist, wobei das genannte Sicherheitselement (5) aus einem verformbaren Material ohne Formgedächtnis oder aus einem Material, welches aufgrund von Schlägen brechen kann, hergestellt ist.

3. Gaszylinder nach Anspruch 2, wobei das Sicherheitselement (5) eine obere Fläche (50) umfasst, welche dazu angepasst ist, das Ablegen eines Elements darauf zu verhindern.

4. Gaszylinder nach Anspruch 3, wobei die obere Fläche (50) des Sicherheitselements (5) geneigt ist, wobei der Abstand zwischen der genannten oberen Fläche (50) und der oberen Fläche (14) des Hauptkörpers (1) je kleiner ist, desto weiter die genannte obere Fläche (50) vom Kolben (2) entfernt ist.

5. Gaszylinder nach einem der Ansprüche 1 bis 4, umfassend Dichtungsmittel (7) zwischen dem Hauptkörper (1) und der Hülse (3), um einen leckdichten Verschluss zwischen beiden Körpern (1, 3) bereitzustellen und die Leckage des Gases aus der Gaskammer (10) zu verhindern, wobei der Hauptkörper (1) eine Variation (16) auf dessen inneren Fläche (16a) umfasst, welche die Gaskammer (10) definiert, und wobei die Hülse (3) einen verformbaren Bereich (31) umfasst, welcher sich nach dem Kontakt mit der Variation (16) verformt, wobei die Leckdichtigkeit zwischen dem Hauptkörper (1) und der Hülse (3), welche von den Dichtungsmittel (7) bereitgestellt wird, gebrochen wird, wobei die genannte Variation (16) und der genannte verformbare Bereich (31) dazu ausgebildet sind, miteinander in Kontakt zu kommen, wenn sich die Hülse (3) als Ergebnis vom Überhub des Kolbens (2) bewegt.

6. Gaszylinder nach Anspruch 5, wobei der verformbare Bereich (31) dazu ausgebildet ist, nach dem Stoßen gegen die Variation (16) im Hauptkörper (1) zu brechen, wobei die Hülse (3) eine Aufnahme (32) umfasst, welche die Dichtungsmittel (7) aufnimmt und mindestens teilweise vom verformbaren Bereich (31) begrenzt ist, wobei die genannte Aufnahme (32) verändert wird, wenn der genannte verformbare Bereich (31) bricht, und dadurch den Verlust der von den Dichtungsmitteln (7) angebotenen Leckdichtigkeit hervorruft.

7. Gaszylinder nach Anspruch 5, wobei der verformbare Bereich (31) dazu ausgebildet ist, sich nach dem Stoßen gegen die Variation (16) des Hauptkörpers (1) zu verformen, wobei die Hülse (3) eine Aufnahme (32) umfasst, welche die Dichtungsmittel (7) aufnimmt und mindestens teilweise vom verformbaren Bereich (31) begrenzt ist, wobei die genannte Aufnahme (32) verändert wird, wenn sich der genannte verformbare Bereich (31) verformt, und dadurch den Verlust der von den Dichtungsmittel (7) angebotenen Leckdichtigkeit hervorruft.

8. Gaszylinder nach einem der Ansprüche 1 bis 7, wobei die Hülse (3) eine ringförmige Aufnahme (33) definiert, welche zwischen der Hülse (3) und dem Kolben (2) begrenzt ist, wobei der Zylinder (100) Dichtungsmittel (8) umfasst, welche in der genannten ringförmigen Aufnahme (33) angeordnet sind, um die Leckage des Gases aus der Gaskammer (10) zwischen der Hülse (3) und dem Kolben (2) zu verhindern.

9. Gaszylinder nach Anspruch 8, wobei die Hülse (3) eine ringförmige Nut (34) definiert, welche zwischen der Hülse (3) und dem Hauptkörper (1) begrenzt ist, wobei die Hülse (3) einen ringförmigen Bereich (35) zwischen der genannten ringförmigen Nut (34) und der ringförmigen Aufnahme (33) definiert, wobei die ringförmige Aufnahme (33), die ringförmige Nut (34) und der ringförmige Bereich (35) derart ausgebildet sind, dass, wenn die Hülse (3) eine Kraft gleich oder größer als ein vorbestimmter Wert trägt, der genannte ringförmige Bereich (35) mindestens teilweise bricht, so dass ein Pfad (36) geöffnet wird, welcher den Kolben (2) mit dem Hauptkörper (1) über die Hülse (3) verbindet.

10. Gaszylinder nach Anspruch 9, wobei der Pfad (36) durch die ringförmige Aufnahme (33) und die ringförmige Nut (34) geht.

## Revendications

1. Bouteille de gaz comprenant un corps principal cylindrique (1) comprenant une ouverture supérieure et comprenant une rainure annulaire (12) s'étendant le long de tout le contour circulaire d'une surface extérieure (13) dudit corps principal (1) et servant à assembler la bouteille de gaz (100) dans sa position opérative, un piston (2) partiellement logé dans le corps principal (1) définissant, conjointement avec le corps principal (1) une chambre à gaz (10) à l'intérieur dudit corps principal (1), étant apte à se déplacer linéairement et longitudinalement et débordant du corps principal (1) à travers l'ouverture supérieure, un manchon (3) aménagé entre le piston (2) et le corps principal (1) un anneau (4) aménagé entre le manchon (3) et le corps principal (1) pour coupler ledit manchon (3) audit corps principal (1), et un relief de sécurité (30) formé par une extension verticale du manchon (3) et débordant axialement d'une surface supérieure (14) du corps principal (1), **caractérisé en ce que** la distance (D1) entre l'anneau (4) et une surface inférieure (15) du corps principal (1), opposée à la surface supérieure (14) dudit corps principal (1), est inférieure à la distance (D2) entre la rainure annulaire (12) dudit corps principal (1) et ladite surface inférieure (15) dudit corps principal (1).

2. Bouteille de gaz selon la revendication 1, comprenant un élément de sécurité (5) aménagé sur la surface supérieure (14) du corps principal (1) entourant le manchon (3), ledit élément de sécurité (5) étant réalisé en une matière déformable sans mémoire de forme ou en une matière qui peut se rompre à cause des impacts.

3. Bouteille de gaz selon la revendication 2, dans laquelle l'élément de sécurité (5) comprend une surface supérieure (50) adaptée pour empêcher qu'un élément se dépose sur celle-ci.

4. Bouteille de gaz selon la revendication 3, dans laquelle la surface supérieure (50) de l'élément de sécurité (5) est inclinée, la distance entre ladite surface supérieure (50) et la surface supérieure (14) du corps principal (1) étant inférieure à ladite surface supérieure additionnelle (50) est séparée du piston (2).

5. Bouteille de gaz selon l'une quelconque des revendications 1 à 4, comprenant des moyens d'étanchéité (7) entre le corps principal (1) et le manchon (3) pour fournir une fermeture étanche aux fuites entre les deux corps (1, 3) et empêchant le gaz de s'échapper de la bouteille de gaz (10), le corps principal (1) comprenant une variation (16) sur sa surface intérieure (16a) définissant la chambre à gaz (10), et le manchon (3) comprenant une zone déformable (31) qui se déforme lors du contact avec la variation (16), l'étanchéité aux fuites entre le corps principal (1) et le manchon (3) pourvu par les moyens d'étanchéité (7) étant rompue, ladite variation (16) et ladite zone déformable (13) étant configurée pour entrer en contact lorsque le manchon (3) se déplace du fait d'une sur-course du piston (2).

6. Bouteille de gaz selon la revendication 5, dans laquelle la zone déformable (31) est configurée pour se rompre lorsqu'elle heurte la variation (16) dans le corps principal (1), le manchon (3) comprenant un logement (32) qui loge les moyens d'étanchéité (7) et est au moins partiellement défini par la zone déformable (31), ledit logement (32) étant modifié lorsque ladite zone déformable (31) se rompt, en provoquant de la sorte la perte de l'étanchéité aux fuites offerte par les moyens d'étanchéité (7).

7. Bouteille de gaz selon la revendication 5, dans laquelle la zone déformable (31) est configurée pour se déformer lorsqu'elle heurte la variation (16) du corps principal (1), le manchon (3) comprenant un logement (32) qui loge les moyens d'étanchéité (7) et est au moins partiellement défini par la zone déformable (31), ledit logement (32) étant modifié lorsque ladite zone déformable (31) se déforme, en provoquant de la sorte la perte de l'étanchéité aux fuite offerte par les moyens d'étanchéité (7).

8. Bouteille de gaz selon l'une quelconque des revendications 1 à 7, dans laquelle le manchon (3) définit un logement annulaire (33) défini entre le manchon (3) et le piston (2), la bouteille (100) comprenant des moyens d'étanchéité (8) aménagés dans ledit logement annulaire (33) pour empêcher que le gaz s'échappe de la chambre à gaz (10) entre le manchon (3) et le piston (2).

9. Bouteille de gaz selon la revendication 8, dans laquelle le manchon (3) définit une rainure annulaire (34) délimitée entre le manchon (3) et le corps principal (1), le manchon (3) comprenant une zone annulaire (35) entre ladite rainure annulaire (34) et le logement annulaire (33), le logement annulaire (33), la rainure annulaire (34) et la zone annulaire (35) étant configurés de manière que lorsque le manchon (3) supporte une force égale ou supérieure à une valeur prédéterminée, ladite zone annulaire (35) se rompt au moins partiellement, ouvrant une voie (36) connectant le piston (2) au corps principal (1) à travers le manchon (3).

10. Bouteille de gaz selon la revendication 9, dans laquelle la voie (36) traverse le logement annulaire (33) et la rainure annulaire (34).
